# EUROPEAN PATENT APPLICATION

(11) **EP 3 372 829 A1**
(43) Date of publication of application: **12.09.2018**
(21) Application number: 17159688.5
(22) Date of filing: 07.03.2017
(51) Int. Cl.: F03D 13/40, B66C 1/10, F03D 13/10

(54) **TAG LINE COUPLING FOR NACELLE**

(71) Applicant: Adwen GmbH, 27572 Bremerhaven (DE)
(72) Inventor: Taubenrauch, Elmar, 27639 Wurster Nordseeküste (DE)
(74) Representative: Prinz & Partner mbB

(57) **Abstract**

The invention relates to a nacelle comprising a nacelle cover and a support frame, the support frame comprising an extension arm, the extension arm being configured to be coupled to a tag line for guiding the nacelle when the nacelle is lifted by a lifting device and being further configured to assume a first position in which the extension arm remains substantially in the interior space of the nacelle and a second position in which the extension arm extends outside the nacelle cover to be coupled with the tag line.

## Description

### Field

The invention relates to lifting a nacelle for a wind driven power plant.

### Background

Wind is one of the most important renewable energy technologies. Wind turbines (also referred to as a wind driven power plants, wind turbine generators, or wind energy converters) are more and more arranged in large-scale offshore wind parks. There are many technical challenges relating to these offshore wind parks, as for example the assembly of parts and the transport, the erection of the wind turbine in the sea and the maintenance of the wind turbines.

During the installation or lifting of a nacelle, tag lines are used to adjust and guide the nacelle with respect to a target position. However, conventional solutions require that the tag lines are fixed in the interior space of the nacelle, thereby increasing the risk of damaging the nacelle cover.

### Summary

It is an object of the invention to reduce the risk of damages of a nacelle during transport and assembly.

According to an aspect, the nacelle comprises a nacelle cover and a support frame. The support frame comprises an extension arm which can be coupled to a tag line for guiding the nacelle during a lifting process. The extension arm is configured to assume a first position in which the extension arm remains substantially in the interior space of the nacelle. The extension arm is configured to assume a second position in which the extension arm extends outside the nacelle cover to be coupled with the tag line. The extension arm can comprise a ring hook which can be configured such that a tag line may be mounted. There is no need to guide the tag line into the interior space of the nacelle and the nacelle cover can advantageously be protected from damages that may be caused by the tag line.

According to another aspect, the nacelle can comprise a removable and/or detachable hatch cover integrated into the nacelle cover. The hatch cover can be configured to be opened such that it allows the extension arm to extend outwards of the nacelle through the hatch opening. The extension arm is configured to extend (partially) outwards of the nacelle and outside the nacelle cover to allow the tag line to be coupled to the extension arm outside the nacelle and with a predetermined distance from the nacelle cover.

According to another aspect, the hatch cover can be fixed to the nacelle cover by a bolted connection. The bolted connection can be configured to be detachable from the interior space of the nacelle cover without having access to the outside of the nacelle.

According to another aspect, the hatch cover and the nacelle cover can be connected to each other by means of overlapping flanges (also referred to as planar overlapping flanges), which are integral to the hatch cover and the nacelle cover. According to another aspect, a sealing can be applied between the planar overlapping flanges of the hatch cover and the nacelle cover. The sealing can provide water and air tightness of the flange connection. Seal paste can be used to tighten the thread and the drill hole of the connection joints of the planar overlapping flanges with respect to water and air. An elastomeric (rubber/silicone) washer can be applied between a steel washer and the flange. The interior space of the nacelle can advantageously be protected against external environmental influences if the hatch cover is closed.

According to another aspect, the flanges advantageously extend in the same plane as the hatch cover and / or nacelle cover to which they belong. Flanges of a curved hatch cover and / or nacelle cover may accordingly extend in a direction substantially tangential to the curve, i.e. continue in the direction of (overall) extension in the region of the hatch cover and / or nacelle cover adjacent to the flange. In other words, the respective flange extends straightly (not bent or curved) from the hatch cover and / or nacelle cover. The shape of the nacelle cover can advantageously be substantially maintained although the hatch cover is integrated into the outer wall of the nacelle cover.

According to another aspect, the extension arm can be configured such that a tag line can be connectable to the extension arm and detachable from the extension arm from an interior space of the nacelle. No access is needed to the extension arm from outside the nacelle in order to connect or detach a tag line to or from the extension arm. This advantageously decreases the risk for technical staff. Generally, attaching or detaching a tag line to the extension arm is, of course possible from the outside as well, e.g. if the nacelle rests on a jack-up barge and is prepared for lifting.

According to another aspect, the extension arm can be configured to provide a safe tag line angle that allows the tag line to be used in a wide angular range. The extension arm can be configured to use the same tag line for controlling the lifting-up and lowering-down of the nacelle in a safe manner. The extension arm provides a tag line angle such that the nacelle can be guided by the tag line substantially independent of the relative height of the nacelle in comparison to a lifting device. The range of the safe tag line angle for which lifting or lowering can be performed in a safe manner can advantageously be defined by a polar angle and an azimuthal angle with respect to the ring hook of the extension arm. The extension arm can be configured such that the safe range of the polar angle is advantageously equal to or larger than ±30° with respect to the longitudinal direction of the extension arm which corresponds to a total safe polar angle range of 60°. Further advantageously the extension arm can be configured such that the safe range of the polar angle is advantageously equal to ±75° with respect to the longitudinal direction of the extension arm which corresponds to a total safe polar angle range of 150°. The extension arm can be configured such that the azimuthal angle is equal to or larger than ±45° with respect to the longitudinal direction of the extension arm which corresponds to a total safe azimuthal angle range of 90°. The extension arm can be configured such that the azimuthal angle is equal to ±90° with respect to the longitudinal direction of the extension arm which corresponds to a total safe azimuthal angle range of 180°. This means that the extension arm can be configured such that the safe tag line solid angle range may be a cone of substantially 2π. This large safe tag line solid angle range advantageously allows the nacelle to be positioned close to a lifting device during a lifting process because even substantially steep tag line angles are within the safe tag line solid angle range.

According to another aspect, the extension arm can be configured to ensure a minimum distance between the tag line and the nacelle cover if the extension arm assumes its second position. The extension arm can be configured to assume a second position such that the ring hook may have a minimum distance to the nacelle cover. In this position the nacelle cover can advantageously be protected from damage potentially caused by the tag line, if the extension arm assumes its second position (fully extended position) and the tag line angle is within the safe tag line solid angle cone. According to another aspect, the extension arm can be configured as a removable tool-kit. Advantageously, the extension arm can be integrated into nacelles already existing and/or removed after a nacelle lifting process. Moreover, the extension arm can be exchanged if necessary.

According to another aspect, the nacelle can comprise a plurality of extension arms which can be positioned at the corners of the nacelle for a more effective control with less pulling forces. The nacelle can comprise a plurality of extension arms in the lower corners of the nacelle. A plurality of extension arms being used with multiple tag lines enables advantageously a more precise control of the nacelle while being lifted. Moreover, positioning the extension arms in the corners of the nacelle causes a reduction of the pulling forces needed to align the nacelle during a lifting procedure compared to a positioning of the extension arms elsewhere at the nacelle.

According to another aspect, the nacelle can comprise a locking mechanism for locking the extension arm in the first and in the second position. The locking mechanism advantageously provides the possibility to avoid unwanted movement of the extension arm and therefore decreases the risk of damages or injuries.

According to another aspect, the extension arm can be made of aluminum or metal.

According to another aspect, the extension arm can be mounted to the nacelle by means of retaining brackets. These brackets can comprise a guidance for the extension arm such that the extension arm is movable only along its longitudinal axis. The retaining brackets can be mounted to the support frame of the nacelle by means of a bolted or welded connection.

According to another aspect the extension arm can comprise a stopping mechanism that limits the axial movement along the longitudinal axis of the extension arm. The extension arm can comprise a disk at its rear end which can abut with one of the retaining brackets in order to limit the axial movement of the extension arm. The extension arm can also comprise a safety screw or bolt which can be attached to its outer surface and which can abut with one of the retaining brackets in order to limit the axial movement of the extension arm. The stopping mechanism can be configured to define a restricted distance which the extension arm is movable along its longitudinal axis.

According to another aspect, the nacelle cover can be manufactured out of individual wide span self-support panels. According to another aspect, the panels of the nacelle cover and the hatch cover are advantageously made of a composite, in particular a fiber reinforced polymer. The fiber reinforced polymer can be a glass fiber reinforced polymer (GFRP). A glass fiber reinforced polymer, also known as "Fiberglass" or "fiberglass" is a type of fiber-reinforced plastic where the reinforcement fiber is specifically glass fiber. The fibers may be randomly arranged and flattened into a sheet (called a chopped strand mat), or woven into a fabric. Alternatively, the fibers of a layer of the composite may be unidirectionally aligned. The polymer matrix may be a thermoset polymer matrix, most often based on thermosetting polymers such as epoxy, polyester resin, or vinylester, or a thermoplastic. Glass fibers are made of various types of glass depending upon the fiberglass use. These glasses all contain silica or silicate, with varying amounts of oxides of calcium, magnesium, and sometimes boron. Other common names for fiberglass are glass-reinforced plastic (GRP), glass-fiber reinforced plastic (GFRP) or GFK (from German: Glasfaserverstärkter Kunststoff). Because glass fiber itself is sometimes referred to as "fiberglass", the composite is also called "fiberglass reinforced plastic." The present description also uses the term "composite" for GFRP or GRP. According to another aspect, the arrangement of the hatch covers and the nacelle cover in general, and in particular of the planar overlapping flanges, can be based on a high-point drainage concept. This means that the hatch cover or nacelle cover of a flange connection having a higher level (greater altitude; greater height) can span / overlap the flange of the lower, complementary nacelle cover or hatch cover on an outer surface of the nacelle cover in a downward direction. This aspect exploits gravitational forces such that a water flow (e.g. caused by rain) is directed away from the split line (of the flange connection).

Advantageously, the flange connection can comprise reinforcing angular ("L"-shaped) beams or similar profiled metal beams, which can be arranged along the flanges, thereby becoming a part of the flange connection. The reinforced flange connection allows for a simple and robust construction of the nacelle cover.

According to another advantageous aspect, the nacelle cover comprises at least two different flange connections, dependent on the fitting conditions and whether the flange connections are configured to be detachable flange connections or permanent flange connections. A first flange connection may comprise a rivet/clinch nut and a bolt. A second flange connection may comprise a clinch bolt and a normal nut. A first flange connection may comprise two metal bars on opposite sides of the flanges. A second flange connection may comprise only one metal bar on one side of the flange connection.

At least one of the panels of a flange connection may comprise a drip edge adjacent to the flange connection.

At least one of the flange connections may be located in an indentation with respect to a surrounding surface of the adjacent panels. This kind of flange connection may advantageously be used at the bottom of a nacelle. The flange connection does then have greater height (level, altitude) than the surrounding panels which improves water tightness.

The metal bars can be arranged and conductively interconnected such that they form a faraday cage to provide a lightning protection of the drive train and other components.

The flange connections may be configured to constitute a substantially maintenance free connection, having an expected / calculated lifetime of approximately twenty-five years.

The configuration of the flange connections and their location and orientation around the nacelle cover as well as the configuration of the panels provides that the nacelle cover is more/better self-supporting, i.e. requires less connection points (brackets) to the support frame than prior art solutions.

According to another advantageous aspect, at least one panel may comprise a sandwich structure having a foam core.

Further, at least one panel of the self-supported nacelle roof can be reinforced by at least one rib. Advantageously, the rib can be an integral part of the panel. There may be a plurality of ribs located in the panels of the nacelle roof. The panels comprising the ribs may be formed in a sandwich construction comprising a core of foam. Advantageously, the nacelle roof can thereby be configured to sustain snow loads (highest load on the roof), live loads load (e.g. from maintenance work) and fall arrest loads.

Advantageously, the panels are configured to comprise an enveloping cuboid that fits into standardized freight containers.

The present invention also provides a wind driven power plant comprising a nacelle which comprises an extension arm according to the aspects and embodiments of the invention.

The present invention also provides a wind park comprising a plurality of wind driven power plants comprising an extension arm according to the aspects and embodiments of the invention.

Further aspects and characteristics of the invention will ensue from the following description of preferred embodiments of the invention with reference to the accompanying drawings, wherein
- FIG. 1 is a simplified perspective view of a wind turbine,
- FIG. 2 is a simplified perspective view of an extension arm in the interior space of the nacelle,
- FIG. 3 is a simplified cross-sectional view of the extension arm in the second position,
- FIG. 4 is a simplified perspective view of the nacelle comprising an extension arm in the second position,
- FIG. 5 is a simplified schematic view of the nacelle illustrating the range of safe tag line polar angle,
- FIG. 6 is a simplified schematic view of the nacelle illustrating the range of safe tag line azimuth angle,
- FIG. 7 is a simplified cross-sectional view of a flange connection of a hatch and the nacelle cover, according to the prior art,
- FIG. 8 simplified cross-sectional view of a flange connection of two overlapping panels of the lateral side wall of the nacelle cover,
- FIG. 9 is a simplified cross-sectional view of a flange connection attaching inner bottom panels to outer bottom panels of the nacelle,
- FIG. 10 is a simplified cross-sectional view of a flange connection attaching a hatch cover to a nacelle panel.

### Detailed description of embodiments

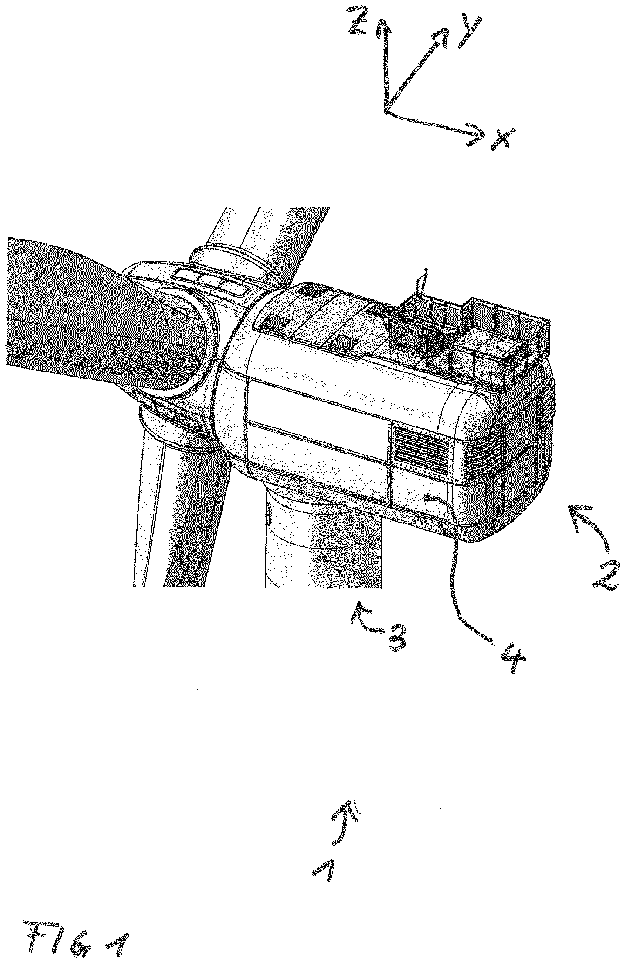

FIG. 1 shows a simplified perspective view of a wind driven power plant 1. The wind driven power plant 1 comprises a nacelle 2. The nacelle extends in a vertical direction Z, which is substantially parallel to the axial extension of a supporting structure, in particular a tower 3 on which the nacelle 2 can be mounted. The nacelle also extends in a horizontal plane defined by a longitudinal direction X, which is substantially parallel to a drive train to be located in the nacelle 2, and a transversal direction Y. The longitudinal direction X and the transversal direction Y are both perpendicular to the vertical direction Z and to each other.

The nacelle 2 comprises a support frame 5 (not shown in FIG. 1) and a nacelle cover 4 that is coupled to the support frame 5. The extension arm 6 (not shown in FIG. 1) is mounted in a lower corner of the nacelle 2, whereas its longitudinal axis is oriented in the transversal direction Y. The front end 17 of the extension arm 6 points away from the nacelle 2 with respect to its longitudinal direction X. By mounting the extension arm 6 in a lower corner of the nacelle 2 the pulling forces needed to align the nacelle 2 during a lifting process are advantageously reduced.

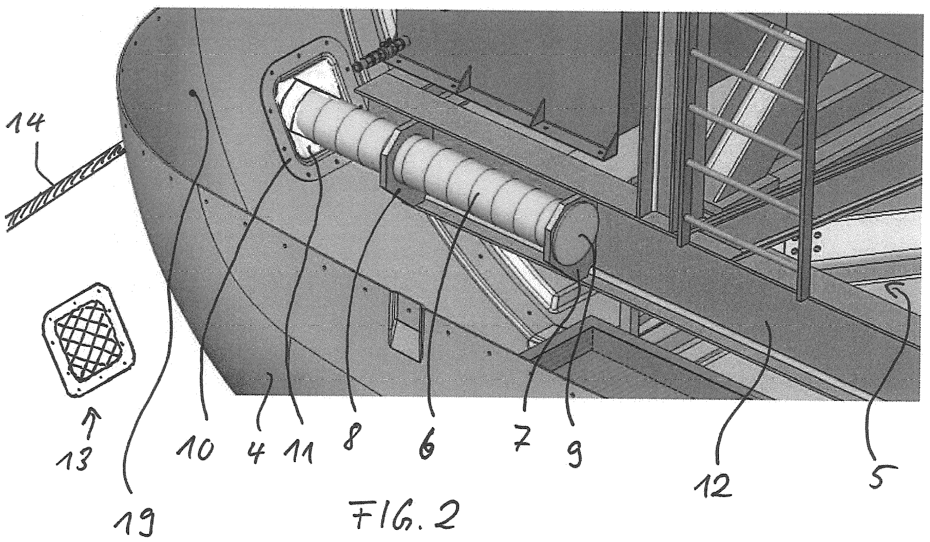

FIG. 2 is a simplified perspective view of the interior space 19 of the nacelle 2. The nacelle cover is only partially shown. There are the support frame 5 of the nacelle 2 and an extension arm 6, which is mounted by means of two individual retaining brackets 7, 8 to a transversal bottom beam 12 of the support frame 5 of the nacelle 2. There are also a flange 10 and an opening 11 in the nacelle cover 4. The extension arm 6 is depicted in the fully extended position (second position) meaning that the front end 17 of the extension arm 6 extends through the opening 11 of the nacelle cover 4 outside the interior space 19 of the nacelle 2. The opening 11 is aligned with a guidance defined by the retaining brackets 7, 8, whereas the opening 11 is surrounded by the flange 10. There is also (partially shown) a tag line 14 attached to the front end 17 of the extension arm.

If the extension arm 6 is retracted towards the interior space 19 of the nacelle 2 a removable and detachable hatch cover 13 can be mounted to the flange 10 in order to close the nacelle cover 4. The hatch cover 13 comprises a shape which substantially follows the shape of the outer wall of the nacelle cover 4. Hence, the streamlined shape of the nacelle cover 4 is advantageously maintained although the hatch cover 13 is integrated.

The term "detachable" in this context should be understood to describe a hatch cover 13 that can be fully detached from the remaining part, i.e. the nacelle cover 4 of the nacelle 2 in an easy and convenient way. As such, a removable and detachable hatch cover 13 is configured to be physically detached and moved away from the nacelle cover 4 and placed inside the nacelle 2, e.g. on a gangway. Sliding or revolving hatch covers which are not conceived to be easily and conveniently fully detachable from the nacelle cover 4 are therefore not considered to be removable and detachable within the meaning of this description.

If the extension arm 6 is supposed to be extended outside (second position) the nacelle 2 the hatch cover 13 is removed. Then, the opening 11 provides a clear diameter which is sufficient to feed the extension arm 6 through the opening 11 outside the nacelle 2.

The extension arm 6 substantially comprises a cylindrical shape which fits to the circular diameter of the cut-outs of the retaining brackets 7, 8. The retaining brackets 7, 8 define a guidance for the extension arm 6 along its longitudinal axis. The extension arm 6 is movable along this guidance by a sliding mechanism.

At the rear end, the extension arm 6 further comprises a cylindrical disk 9 which has a maximum diameter which is larger than the cut-out inside the rear retaining bracket 7. The cylindrical disk 9 ensures that the extension arm 6 cannot be pushed forward such that it leaves the guidance defined by the retaining brackets 7, 8. The disk 9 is configured as a stopping mechanism and advantageously abuts at the rear bracket 7 before the extension arm 6 can leave the guidance.

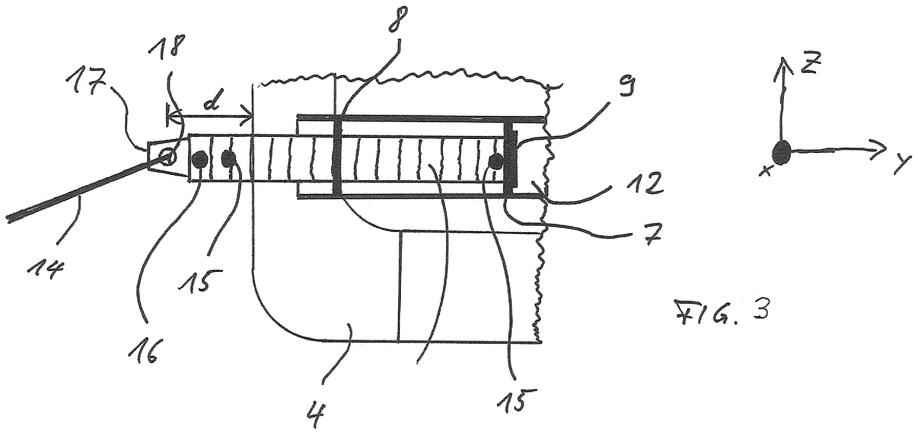

FIG. 3 is a simplified cross-sectional view of the extension arm in the fully extended position (second position). The tag line 14 is attached to a ring hook 18 at the front end 17 of the extension arm 6. In the fully extended position (second position) the ring hook 18 has a predetermined distance d from the nacelle cover 4 along the longitudinal axis of the extension arm 6.

The extension arm 6 further comprises a stopping mechanism 16 at the front part of the extension arm 6. This stopping mechanism 16 prevents the extension arm 6 to slide out of the guidance defined by the retaining brackets 7, 8 in the direction towards its rear end. The stopping mechanism is realized with a protection bolt or screw 16 attached at the outer surface of the extension arm 6. The protection bolt or screw depicts a stopping mechanism as it abuts with the front retaining bracket 8 in the fully retracted position (first position) of the extension arm 6.

The extension arm 6 further comprises a locking mechanism which is realized by locking bolts or screws 15 attached at the outer surface of the extension arm 6. The locking mechanism enables the extension arm 6 to be locked in either the fully extended position (second position) or the fully retracted position (first position).

The extension arm 6 is removable from the retaining brackets 7, 8 if the stopping and locking mechanisms 9, 15, 16 are (partially) detached from the extension arm 6. This means, that the extension arm 6 can generally be integrated into already existing systems. Furthermore, the extension arm 6 may only be present and mounted to the support frame 5 of the nacelle 2 in case a lifting process of the nacelle 2 is supposed to be carried out. Afterwards, the extension arm 6 may be detached again. The extension arm 6 is useable as a removable tool-kit.

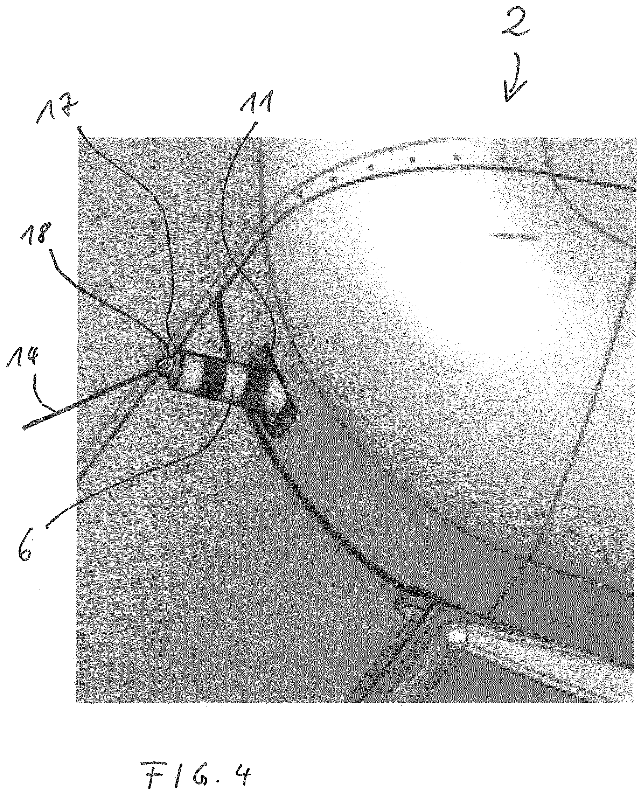

FIG. 4 is a simplified perspective view of the nacelle 23 which comprises an extension arm 6 in extended positions (second position). The extension arm 6 is mounted at a lower (rear) corner of the nacelle 2 being oriented along the transversal direction Y. The extension arm 6 comprises at their front end 17 a ring hook 18. A tag line 14 is mounted to the ring hook 18 for guiding the nacelle 2 during a lifting process.

The tag line 14 can be mounted to the extension arm 6 from the interior space 19 of the nacelle 2 through an opening 11. To this end, the hatch cover 13 is detached and subsequently the extension arm 6 is positioned such that the ring hook 24 is outside the nacelle cover 4 whereas the remaining part of the extension arm 6 is still positioned in the interior space 19 of the nacelle 2. The opening 11 comprises a sufficient maximum diameter to mount a tag line 14 to the ring hook 15 at the front end of the extension arm 6. Advantageously, the opening 11 is limited in size to reduce the risk of hazards for maintenance staff. If the tag line 14 is attached to the ring hook 15, the extension arm 6 can be pushed further out until it is fully extended and assumes the second position.

Since the extension arm 6 is mounted to the support frame 5, in particular to a transversal bottom beam 12 of the support frame 5 of the nacelle 2, the pulling forces caused by the tag line 14 during a lifting procedure are advantageously led into the support frame 5 and do not act on the nacelle cover 4.

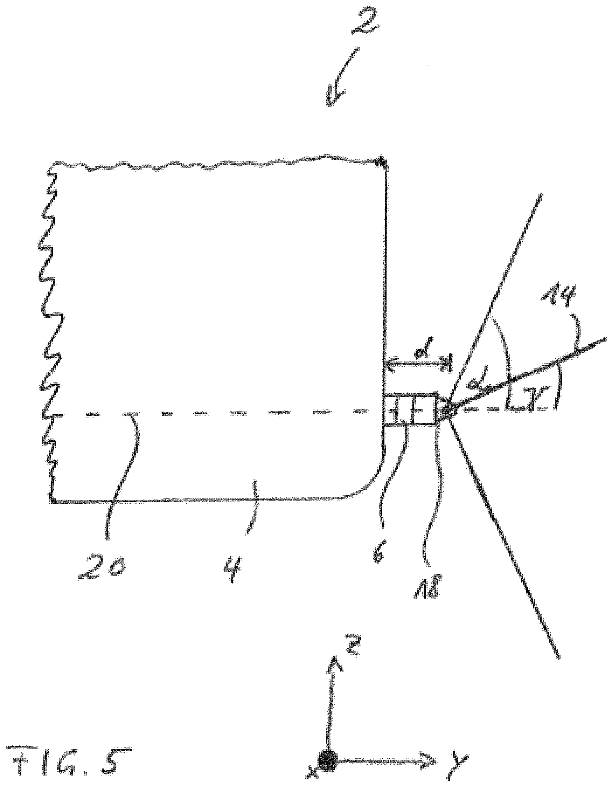

FIG. 5 is a simplified schematic view towards the rear side of the nacelle 2 along the X direction. At the longitudinal side of the nacelle 2 there is one extension arm 6 in the second position. At the extension arm 6 a tag line 14 is attached to the ring hook 18. There is a horizontal plane 20 indicated which is oriented in the XY plane and contains the longitudinal axis of the extension arm 6.

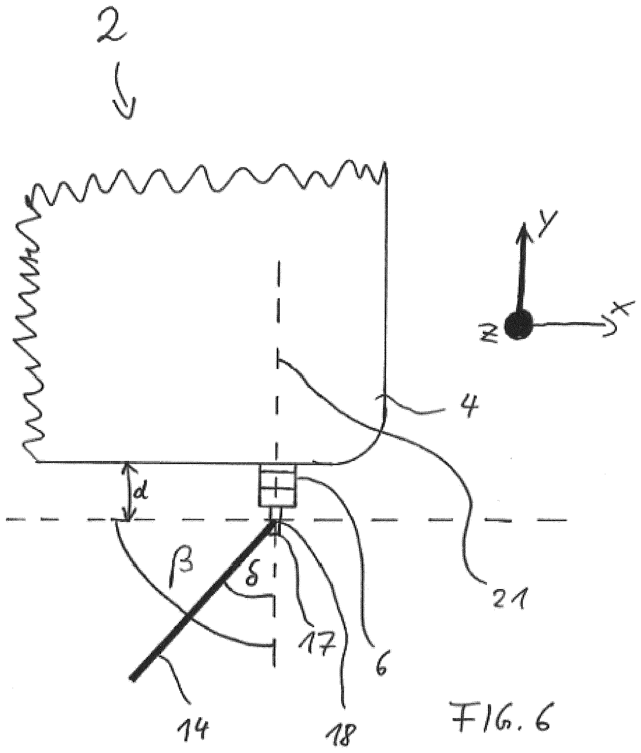

FIG. 6 is a simplified schematic view towards the top side of the nacelle 2 along the z direction. Fig. 6 is a corresponding view of Fig. 5. At the longitudinal side of the nacelle 2 there is one extension arm 6 in the second position. At the extension arm 6 a tag line 14 is attached to the ring hook 18. There is a vertical plane 21 indicated which is oriented in the YZ plane and contains the longitudinal axis of the extension arm 6.

The ring hook 18 has a distance d with respect to the nacelle cover 4 along the longitudinal axis of the extension arm.

There is a polar angle α which refers to the horizontal plane 20 and an azimuth angle β which refers to the vertical plane 21. The angles α and β determine a safe polar angle range and a safe azimuth angle range of the tag line angles γ and δ for which a contact between the tag line 14 and the nacelle cover 4 is advantageously avoided. The ranges are symmetric with respect to the horizontal plane 20 and the vertical plane, respectively. This means that the absolute value of the maximum positive safe polar angle equals the absolute value of the minimum safe polar angle: |αₘₐₓ| = |αₘᵢₙ|. Similar this is the case for the azimuth angle: |βₘₐₓ| = |βₘᵢₙ|. Correspondingly, the total safe tag line polar angle range is given by 2αₘₐₓ and the safe tag line azimuth angle rage is given by 2βₘₐₓ.

As long as the extension arm 6 assumes its second position and the absolute values of the polar tag line angle γ and the azimuth tag line angle δ are smaller than the maximum absolute values of the safe polar angle αₘₐₓ and of the safe azimuth angle βₘₐₓ, the tag line angles γ and δ are within the safe polar and azimuth angle ranges of the tag line.

The total safe tag line polar angle range advantageously equals 150° (±75° with respect to the horizontal plane 20). The total safe tag line azimuth angle range advantageously equals 180° (±90° with respect to the vertical plane 21).

The safe ranges of the tag line angles provides the possibility to use a tag line 14 mounted to the same extension arm 6 for controlling a lifting-up and a lowering-down of the nacelle 2 during a single operation. Accordingly, the nacelle 2 can advantageously be guided by the tag line 14 (almost) independently of the relative height of the nacelle 2 in comparison to a lifting device. The nacelle 2 may also be positioned substantially close to the lifting device since the maximum safe polar angle is substantially steep. As another consequence, the extension arm 6 is also configured to ensure a minimum distance d between the tag line 14 and the nacelle cover 4 if the extension arm 6 assumes its extended position (second position) and if the tag line angles are within the safe ranges for the tag line 14. In this case, the nacelle cover 4 is protected from damage caused by the tag line 14.

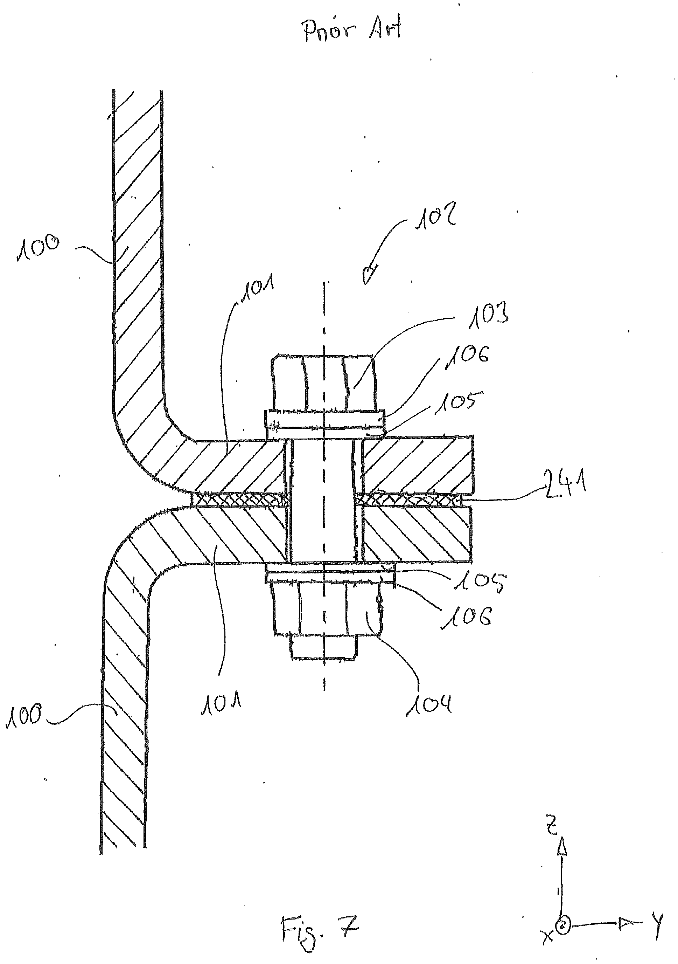

FIG. 7 shows a simplified cross-sectional view of a flange connection of two nacelle cover panels 100, according to the prior art. Flanges 101 extend perpendicularly from the panels 100. The flanges 101 are connected by a bolted (screwed) connection 102 on the in inside of the nacelle. This provides that the bolt 103 and the nut 104 are both accessible from inside the nacelle. The bolted connection may comprise additional washers 105 (i.e. optional elastomeric washers for sealing and/or spring washers) and metallic washers 106. Advantageously, due to the configuration of the flanges 101, the bolted assembly 102 on the inside of the nacelle is well protected from environmental effects outside the nacelle.

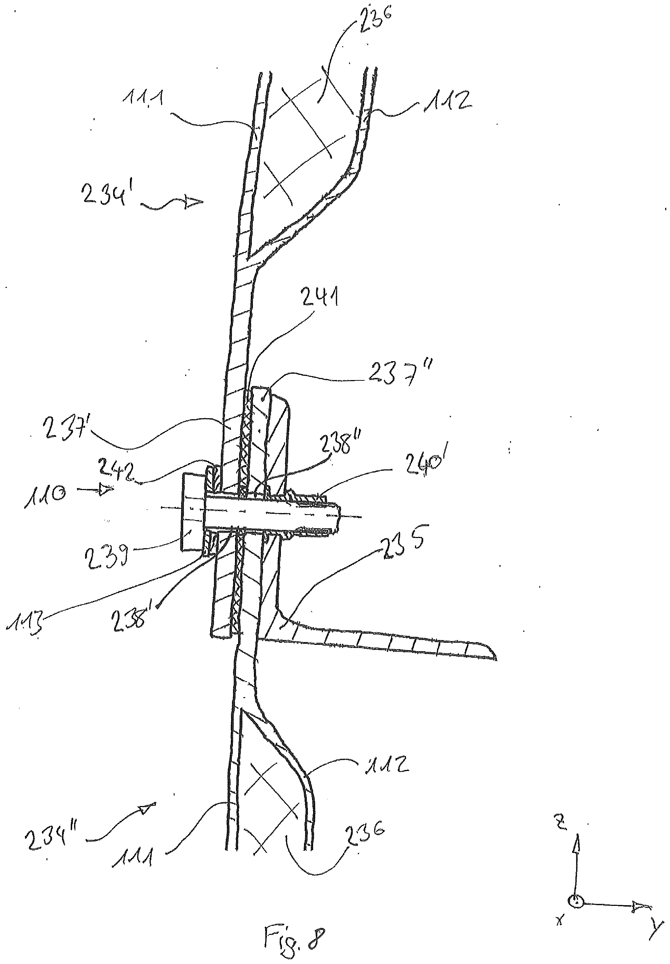

FIG. 8 shows a simplified perspective cross-sectional view of an exemplary flange connection 110 of two overlapping nacelle cover panels 234 according to an aspect of the invention. The nacelle panels 234 are made of a composite, in particular a glass fiber reinforced polymer (GFRP).

Each composite panel 234 is manufactured as a wide span self-support composite panel. The panel 234 is configured as a typical sandwich lamination. Each panel 234 comprises an outer side fiberglass layer 111 and an inner side fiberglass layer 112. The panels 234 can optionally comprise a middle foam core 236 in-between the outer side fiberglass layer 111 and the inner side fiberglass layer 112. The foam core 236 can be configured to form reinforcement ribs in the panel 234. Alternatively, the foam core 236 can be a global foam core 236, i.e. spanning a major part of the panel 234. The foam cores 236 are covered by the outer side and inner side fiberglass layers 111, 112 and enhance the stability of the panel 234.

Resin infusion is utilized during the lamination process. In a one-shot resin infusion process, the resin is distributed in a uniform manner across the layup. Subsequently, bonding / curing the complete layup can be conducted, e.g. in an autoclave. Accordingly, a majority or all the composite panels of the nacelle 2 are manufactured in a one-shot lamination/manufacturing step.

The panels 234 are connected to each other by means of overlapping flanges 237. Each of the flanges 237 is integral to one of the panels 234. The flanges 237 advantageously extend in the same plane as the panel 234 to which it belongs or at least in substantially the same plane as the region of the panel 234 adjacent to the flange 237. In other words, the respective flange 237 extends essentially straightly (not bent or curved) from the adjacent region of the panel 234.

The arrangement of the panels of the nacelle cover 4 in general, and in particular of the overlapping flanges 237, is based on a high-point drainage concept. This means that the flange 237' of the top panel 234' of a flange connection 110 having a higher level (greater altitude; greater height) spans / overlaps the flange 237" of the complementary bottom panel 234" (the bottom panel 234" having a lower level) on an outer surface of the nacelle 2 in a downward direction. Hence, the arrangement of the overlapping flanges 237', 237" advantageously exploits gravitational forces which determine the water flow direction in order to keep water from flowing into the nacelle 2.

The drillings 238 (drill holes) for the flange connection 110 are applied after the manufacturing process of the composite panels 234, i.e. after curing and / or autoclaving the panels 234, and after the respective panels 234', 234" are adjusted to each other. With this procedure, the accuracy of fit of corresponding drillings 238', 238" in the flanges 237 of both respective panels 234 is advantageously ensured.

According to an aspect, specialized threaded bolts 239 and nuts 240 are used. Either a (clinch) bolt 239' or a (clinch / rivet) nut 240' is pressed (clinched, riveted) into a reinforcing metal beam 235 that is part of the flange connection 110. Given this procedure, the attached threaded bolt 239' or nut 240' is fixed in position and is not rotatable. The complementary nut 240 or bolt 239 used to tighten the connection joint can accordingly be applied from the inside or the outside of the nacelle 2, depending on the configuration (the flange connection 110 being a permanent connection or a detachable connection). Generally, a detachable flange connection should be accessible at least from inside the nacelle 2. No access to the joint is necessary from the outside which advantageously decreases the risk during assembling or maintaining the nacelle 2. A permanent flange connection 110 may be operated (loosened / disengaged, tightened / engaged) from inside or the outside the nacelle 2, depending on accessibility of the flange connection.

In this embodiment, a rivet nut 240' is riveted to the metal bar 235 on the inside. The bolt 239 is screwed into the rivet nut 240' from the outside.

The flange connection 110 is reinforced by profiled metal bars 235 (metal beams), which can be arranged adjacent to the flanges 237 (and extending along the split line), thereby becoming a part of the flange connection 110. The metal bars 235 can, for example, exhibit a flat bar shape and/or an "L"-shape (as shown). The metal bars 235 are mounted to the connection joints to stabilize the flange connection. Furthermore, the "L"-shaped metal bars 235 are further used and configured to mount the composite panels 234 to the lateral sections of the framework structure of the support frame of the nacelle 2. Adjustable brackets can be coupled to the L-shaped or angular metal bars 235 and the support frame, i.e. the beams or truss members of the support frame.

The metal bars 235 can be arranged and conductively interconnected such that they form a faraday cage to provide a lightning protection of the drive train and other components.

Between the panels 234 a sealing 241 is applied and provides water and air tightness of the flange connection 110. Water and air tightness generally refers to a liquid / fluid ingress protection under environmental conditions the nacelle 2 is exposed to. Sealing paste can be used to tighten the drill holes 238', 238" with respect to water and air. A liquid bolt retaining compound (also: liquid screw retention or liquid screw locking) can protect the screwed connection of the bolt 239 and the nut 240 against undesired loosening. An elastomeric (rubber/silicone) washer 242 is applied between a steel washer 113 and the flange 237.

The flange connection 110 is configured to be a substantially maintenance free connection, having an expected / calculated lifetime of approximately twenty-five years.

In short, the flange connection 110 comprises (from outside to inside of the nacelle 2) a bolt 239 extending through a metal washer 113, an elastomeric washer 242, a drill hole 238' in the outer/top panel 234', an elastomeric sealing 241, a drill hole 238" in the inner / bottom panel 234", and a rivet nut 240' riveted into a hole of a profiled metal bar 235. The bolt 239 is screwed into the rivet nut 240' from the outside.

The concept of planar flange connections 110 in combination with the high-point drainage concept has surprisingly proven to be more robust and easier to maintain than the prior art flange connections 100.

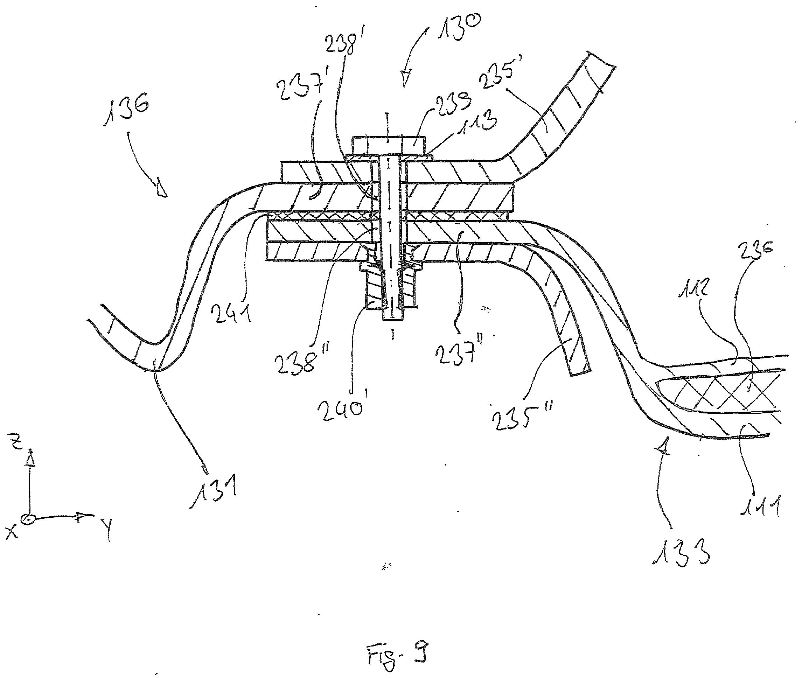

FIG. 9 is a simplified cross-sectional view of a flange connection 130 attaching inner bottom panels 133 to outer bottom panels 136 of the nacelle 2.

Each panel 133, 136 comprises an outer side fiberglass layer 111 and an inner side fiberglass layer 112. The panels 133, 136 can optionally comprise a middle foam core 236 in-between the outer side fiberglass layer 111 and the inner side fiberglass layer 112. The foam core 236 can be a global foam core 236, i.e. spanning over a major portion of the panels 133, 136. The foam cores 236 are covered by the outer side and inner side fiberglass layers 111, 112 and enhance the stability of the panels 133, 136.

The panels are connected to each other by means of overlapping flanges 237. Each of the flanges 237', 237" is integral to one of the panels 133, 136. The flanges 237 advantageously extend in the same plane as the panel 133, 136 to which it belongs, or at least in substantially the same plane as the region of the panel adjacent to the flange 237.

The arrangement of the panels of the nacelle cover 4 in general, and in particular of the overlapping flanges 237', 237" and the inner and outer bottom panels 133, 136 in the bottom of the nacelle 2, is based on the high-point drainage concept.

The inner bottom panels 133 are configured to be detachable panels. The inner bottom panels 133 cover / span the opening between the outer bottom panels 136 from the outside.

With regard to the high-point drainage concept, this means that the outer bottom panels 136 comprise a(n outer) drip edge 131 that has a substantially lower level than the flange connection 130.

In other words, the flange connection 130 according to this embodiment is located in an indentation with respect to a surrounding surface of the adjacent panels 133, 136. This kind of flange connection is advantageously used at the bottom of a nacelle 2. The flange connection does then have greater height (altitude) than the surrounding panels which improves water tightness.

The drill holes 238 for the flange connection 130 are applied after the manufacturing process of the composite panels 133, 136.

Either a bolt 239' or a nut 240' is pressed into a reinforcing metal beam 235 that is part of the flange connection 130. The attached threaded bolt 239' or nut 40' is therefore fixed in position and not rotatable. The complementary nut 240 or bolt 239 used to tighten the connection joint can accordingly be applied from the inside or outside of the nacelle 2, depending on the configuration (the flange connection 130 being a permanent connection or a detachable connection). Generally, a detachable flange connection should be accessible from inside the nacelle 2. A permanent flange connection 130 may be operated (loosened/disengaged, tightened/engaged) from inside or the outside the nacelle 2, depending on accessibility of the flange connection.

In this embodiment, a rivet nut 240' is riveted to the lower metal beam 235". A bolt 239 is screwed into the rivet nut 240' from the inside to tighten the detachable flange connection 130.

The flange connection 120 is reinforced by profiled metal bars 235', 235" on the inside and the outside of the nacelle 2 adjacent to the top flange 237' and the bottom flange 237", respectively. The metal bars are substantially "L-shaped having an obtuse angle (shown) or alternatively have a flat bar profile (not shown). The metal bars 235', 235" substantially sandwich the flanges 237', 237" of the panels 136, 133 in-between. The metal bars 235', 235" extend along the split line between adjacent panels. The metal bars 235', 235" are a part of the flange connection 130.

The metal bars 235 can be arranged and conductively interconnected such that they form a faraday cage to provide a lightning protection of the drive train and other components.

Between the panels 136, 133 a sealing 241 is applied and provides water and air tightness of the flange connection 130.

Moreover, sealing paste can be used to tighten the drill holes 238', 238" with respect to water and air. A liquid bolt retaining compound can protect the screwed connection of the bolt 239 and the rivet nut 240' against undesired loosening. The flange connection 130 further comprises a steel washer 113 (and/or a spring washer) between the inside metal bar 235' and the bolt 239.

The flange connection 130 can be configured to be a substantially maintenance free connection.

In short, the flange connection 130 comprises (from inside to outside of the nacelle 2) a bolt 239 extending through a metal washer 113 and a hole of the inside metal bar 235', the bolt 239 further extending through a drill hole 38' in the top flange 237' (of the outer bottom panel 136), an elastomeric sealing 241, a drill hole 238" in the bottom flange 237" (of the inner bottom panel 133), and a rivet nut 240' riveted into in an outside metal bar 235". The bolt 239 is screwed into the rivet nut 240' from the inside.

The concept of planar flange connections 130 in combination with the high-point drainage concept has surprisingly proven to be more robust and easier to maintain than the prior art flange connections 100.

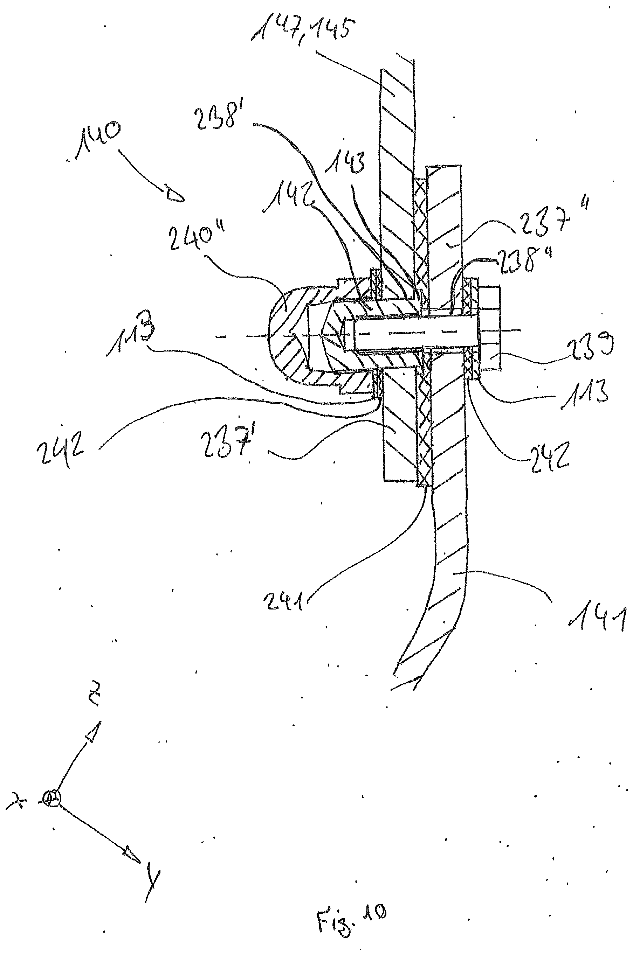

FIG. 10 is a simplified cross-sectional view of a flange connection 140 attaching a hatch cover 141 of a lateral extension arm hatch to an outer front or rear bottom panel 147, 145. The hatch cover 141 is opened and closed from inside the nacelle 2.

The panel 147, 145 and the hatch cover 141 are connected to each other by means of overlapping flanges 237. Each of the flanges 237', 237" is integral to one of the panel 147, 145 and the hatch 141, respectively. The flange 237 extends in the same plane as the panel 147, 143.

The hatch cover 141 covers / spans the opening in the outer front / rear bottom panel 147, 145 from the inside.

The drill holes 238 for the flange connection 130 are applied after the manufacturing process of the composite panels 147, 145, 141.

A bushing 142 having a male (outer) threading at an outer surface and a female (inner) threading at an inner surface comprises (in axial direction of the threading) a thin end and a thickened end comprising a collar 143. The bushing 142 is inserted - thin end first, thickened end last - from inside to outside the nacelle 2 through a drill hole 238' in the outside flange 237'. A cap nut 240" is screwed onto the male threading of the bushing 142 from the outside. The cap nut 240" and outside flange 237' sandwich a steel washer 113 and an elastomeric washer 242 in between. The steel washer 113 is positioned adjacent the cap nut 240", the elastomeric washer 242 between steel washer 113 and outside flange 237'. There is a sealing 241 positioned adjacent to the outside flange 237' of the outer (bottom) panel 147, 145 and sandwiched between the outside flange 237' and the inside flange 237". A bolt 239 extends (from the inside) through a steel washer 113, an elastomeric washer 242, a hole in the inside flange 237", and the sealing 241. The bolt 239 is screwed into the female threading of the bushing 141.

Moreover, sealing paste can be used to tighten the drill holes 238', 238" in the flanges 237', 237" with respect to water and air. A liquid bolt retaining compound can protect the screwed connection of the cap nut 240" and the bushing 142, and the bolt 239 and the bushing 142 against undesired loosening.

The flange connection 130 can be configured to be a substantially maintenance free connection.

In short, the flange connection 130 comprises (from inside to outside of the nacelle 2) a bolt 239 extending through a metal washer 113 and an elastomeric washer 242. The bolt 239 further extends through a drill hole 238" in the inside flange 237" (of the hatch cover 141), an elastomeric sealing 241, into a bushing 142. The bushing extends through a hole 238' in the outside flange 237', an elastomeric washer 242, a steel washer 113 and into the cap nut 240". The bolt 239 is screwed into the bushing 142, and the bushing 142 is screwed into the cap nut 240".

The concept of planar flange connections 140 provides an air and watertight hatch cover that can be operated from inside the nacelle 2.

Although the invention has been described hereinabove with reference to specific embodiments, it is not limited to these embodiments and no doubt further alternatives will occur to the skilled person that lie within the scope of the invention as claimed.

## Claims

1. A nacelle comprising a nacelle cover and a support frame, the support frame comprising an extension arm, the extension arm being configured to be coupled to a tag line for guiding the nacelle when the nacelle is lifted by a lifting device and being further configured to assume a first position in which the extension arm remains substantially in the interior space of the nacelle and a second position in which the extension arm extends outside the nacelle cover to be coupled with the tag line.

2. The nacelle according to claim 1, wherein the nacelle comprises a removable and/or detachable hatch cover integrated into the nacelle cover, wherein the hatch cover is configured to be opened in order to allow the extension arm to extend outwards of the nacelle through the hatch opening.

3. The nacelle according to claim 2, wherein the hatch cover is fixed to the nacelle cover by a bolted connection, wherein the bolted connection is configured to be detachable only from the interior space of the nacelle.

4. The nacelle according to claim 2 or 3, wherein the hatch cover is coupled to the nacelle cover by means of planar overlapping flanges of the hatch cover and the nacelle cover, whereas the planar overlapping flanges are integral to the hatch cover and the nacelle cover.

5. The nacelle according to claim 4, wherein an intermediate sealing element is arranged between the planar overlapping flanges of the hatch cover and the nacelle cover.

6. The nacelle according to claim 4 or 5, wherein the flange of the hatch cover extends in substantially the same plane as the hatch cover and the flange of the nacelle cover extends in substantially the same plane as a surrounding region of the nacelle cover which surrounds the hatch cover and is close to the hatch cover.

7. The nacelle according to anyone on the preceding claims, wherein the extension arm is configured such that a tag line can be connected and detached to the extension arm from the interior space of the nacelle.

8. The nacelle according to anyone of the preceding claims, wherein the extension arm is configured to provide a safe tag line angle range which makes it possible to use the same tag line with different tag line angles for controlling the lifting-up and lowering-down of the nacelle in a safe manner.

9. The nacelle according to claim 8, wherein the extension arm ensures a minimum distance between the tag line and the nacelle cover if the extension arm assumes its second position and the tag line angle is a within the safe tag line angle range.

10. The nacelle according to anyone of the preceding claims, wherein the extension arm is configured as a removable tool-kit.

11. The nacelle according to anyone of the preceding claims, comprising a plurality of extension arms which are positioned at the corners of the nacelle for more effective control with the less pulling forces.

12. The nacelle according to anyone of the preceding claims, further comprising a locking mechanism for locking the extension arm in the first and in the second position.

13. A wind driven power plant comprising a nacelle according to any previous claim.

14. A wind park comprising a plurality of wind driven power plants according to claim 13.
